# EUROPEAN PATENT APPLICATION

(11) **EP 4 641 811 A1**
(43) Date of publication of application: **29.10.2025**
(21) Application number: 23906730.9
(22) Date of filing: 06.12.2023
(51) Int. Cl.: H01M 50/533, H01M 50/534, H01M 50/548

(54) **SECONDARY BATTERY**

(30) Priority: 23.12.2022 JP 2022207313
(71) Applicant: Panasonic Energy Co., Ltd., Osaka 570-8511 (JP)
(72) Inventor: YOSHINAGA, Yuma, Osaka 571-0057 (JP)
(74) Representative: Eisenführ Speiser
(86) International application number: PCT/JP2023/043655
(87) International publication number: WO 2024/135364

(57) **Abstract**

This secondary battery comprises an electrode body in which a positive electrode and a negative electrode are wound with a separator interposed therebetween, a battery case that accommodates the electrode body, and an electrode lead (30) that establishes electrical continuity between the positive electrode or the negative electrode and the battery case, characterized in that: the electrode lead (30) is an inlay cladding member having a first metal member (32) and a second metal member (34) that has a higher electrical resistivity than the first metal member (32), the second metal member (34) being fitted into a surface of the first metal member (32) along the longitudinal direction of the electrode lead (30); the second metal member (34) and the positive electrode or the negative electrode are joined at one end side in the longitudinal direction of the electrode lead (30); and the second metal member (34) and the battery case are joined at the other end side in the longitudinal direction of the electrode lead (30).

## Description

### TECHNICAL FIELD

The present disclosure relates to a secondary battery.

### BACKGROUND

For example, a secondary battery such as a non-aqueous electrolyte secondary battery has a configuration in which an electrode assembly in which a positive electrode and a negative electrode are wound with a separator interposed between the positive electrode and the negative electrode is housed in a battery case, and an electrode lead (positive electrode lead, negative electrode lead) electrically connects the electrode (positive electrode, negative electrode) and the battery case.

For example, Patent Literature 1 discloses that a negative electrode lead is made of a composite material of two layers on a negative electrode side and a battery case side, and each of the layers is made of a material having higher bondability to the facing negative electrode or battery case than the other layer.

Further, for example, Patent Literature 2 discloses that a negative electrode lead has a multilayer structure including a first layer of copper or a copper alloy and a second layer of nickel or a nickel alloy.

Further, for example, Patent Literature 3 discloses that in an electrode lead connected to an electrode assembly, a tip portion on a side opposite to an electrode assembly is cladded.

In addition, for example, Patent Literature 4 discloses a negative electrode lead in which both surfaces of copper are coated with nickel.

### CITATION LIST

### PATENT LITERATURE

Patent Literature 1: JP H10-154490 A
Patent Literature 2: JP 2003-100278 A
Patent Literature 3: JP 2003-123733 A
Patent Literature 4: JP 2001-176491 A

### SUMMARY

By the way, when an electrode lead is welded to an electrode or a battery case, it is desired to suppress degradation of bondability to the electrode or the battery case. In addition, it is also desired to improve the current collection efficiency by reducing the resistance of the electrode lead.

An object of the present disclosure is to reduce resistance of an electrode lead provided in a secondary battery while maintaining bondability to electrodes and a battery case.

A secondary battery according to the present disclosure includes: an electrode assembly in which a positive electrode and a negative electrode are wound with a separator interposed between the positive electrode and the negative electrode; a battery case housing the electrode assembly; and an electrode lead that electrically connects the positive electrode or the negative electrode and the battery case, wherein the electrode lead is an inlay clad member having a first metal member and a second metal member that has a higher electrical resistivity than the first metal member, the second metal member is fitted into a surface of the first metal member along a longitudinal direction of the electrode lead, the second metal member and the positive electrode or the negative electrode are bonded on one end side in the longitudinal direction of the electrode lead, and the second metal member and the battery case are bonded on the other end side in the longitudinal direction of the electrode lead.

According to the present disclosure, it is possible to reduce resistance of the electrode lead provided in the secondary battery while maintaining bondability to the electrodes and the battery case.

### BRIEF DESCRIPTION OF DRAWINGS

FIG. 1 is a schematic cross-sectional view of a secondary battery according to an example of an embodiment.
FIG. 2 is a schematic perspective view showing an example of an electrode lead of the present embodiment.
FIG. 3 is a schematic perspective view showing another example of the electrode lead of the present embodiment.
FIG. 4 is a schematic perspective view showing another example of the electrode lead of the present embodiment.
FIG. 5 is a schematic perspective view showing another example of the electrode lead of the present embodiment.
FIG. 6 is a schematic cross-sectional view showing a bonded state between the electrode lead shown in FIG. 2 and an electrode or a battery case.
FIG. 7 is a schematic cross-sectional view showing a bonded state between the electrode lead shown in FIG. 3 and the electrode or the battery case.
FIG. 8 is a schematic cross-sectional view showing a bonded state between the electrode lead shown in FIG. 4 and the battery case.
FIG. 9 is a schematic cross-sectional view showing a bonded state between the electrode lead shown in FIG. 4 and the electrode.
FIG. 10 is a schematic cross-sectional view showing a bonded state between the electrode lead shown in FIG. 5 and the battery case.
FIG. 11 is a schematic cross-sectional view showing a bonded state between the electrode lead shown in FIG. 5 and the electrode.

### DESCRIPTION OF EMBODIMENTS

Hereinafter, an example of an embodiment of a secondary battery according to the present disclosure will be described.

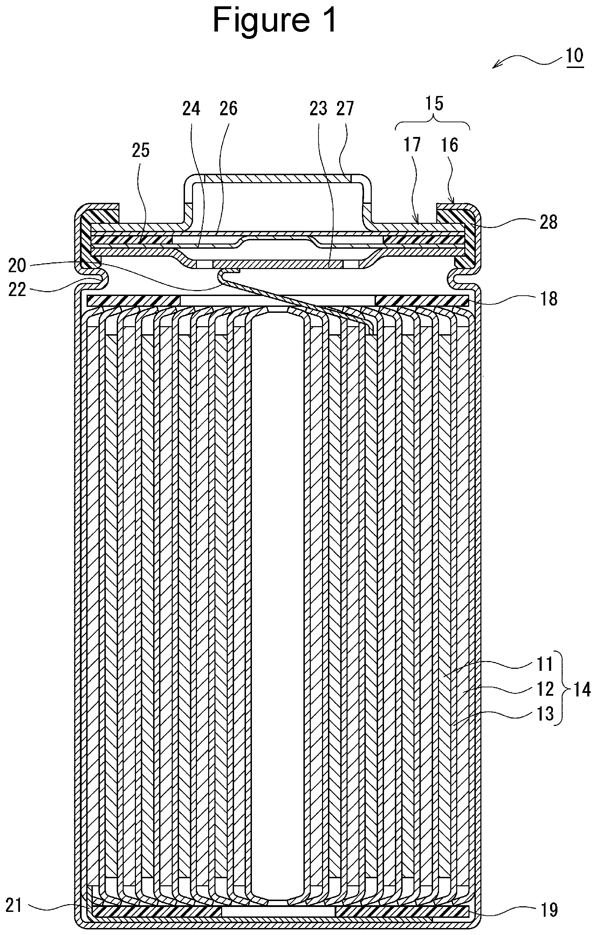

FIG. 1 is a schematic cross-sectional view of a secondary battery according to the example of the embodiment. The secondary battery 10 shown in FIG. 1 includes a wound electrode assembly 14 formed by winding a positive electrode 11 and a negative electrode 12 with a separator 13 interposed between the positive electrode 11 and the negative electrode 12, an electrolyte, insulating plates 18 and 19 disposed on upper and lower sides of the electrode assembly 14, respectively, a positive electrode lead 20, a negative electrode lead 21, and a battery case 15 housing the above-described members. The battery case 15 includes a bottomed cylindrical case body 16 and a sealing assembly 17 that closes an opening of the case body 16. Examples of the battery case 15 include a metal case having a cylindrical shape, a square shape, or the like and a resin case (so-called laminate type) formed by laminating resin sheets.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material (for example, an oxide-based solid electrolyte, a sulfide-based solid electrolyte, a halogen-based solid electrolyte, or the like) known for all-solid-state lithium ion secondary batteries and the like can be used. The electrolyte exemplified above is a non-aqueous electrolyte, but the electrolyte is not limited to the non-aqueous electrolyte, and may be an aqueous electrolyte.

The case body 16 is, for example, a bottomed cylindrical metal container. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape along a circumferential direction of the case body 16, and supports the sealing assembly 17 on an upper surface of the projecting portion.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 breaks, and gas is discharged from an opening of the cap 27.

One end of the positive electrode lead 20 is bonded to the positive electrode 11, and the other end of the positive electrode lead 20 passes through a through hole of the insulating plate 18 and is bonded to a lower surface of the filter 23 which is a bottom plate of the sealing assembly 17. According to such an aspect, the positive electrode 11 and the sealing assembly 17 are electrically connected via the positive electrode lead 20, and the cap 27 which is a top plate of the sealing assembly 17 serves as a positive electrode terminal. One end of the negative electrode lead 21 is bonded to the negative electrode 12, and the other end of the negative electrode lead 21 extends through the outside of the insulating plate 19 and is bonded to an inner surface of a bottom portion of the case body 16. According to such an aspect, the negative electrode 12 and the case body 16 are electrically connected via the negative electrode lead 21, and the case body 16 serves as a negative electrode terminal.

At least one of the positive electrode lead 20 and the negative electrode lead 21 is used as an electrode lead of the present embodiment described below.

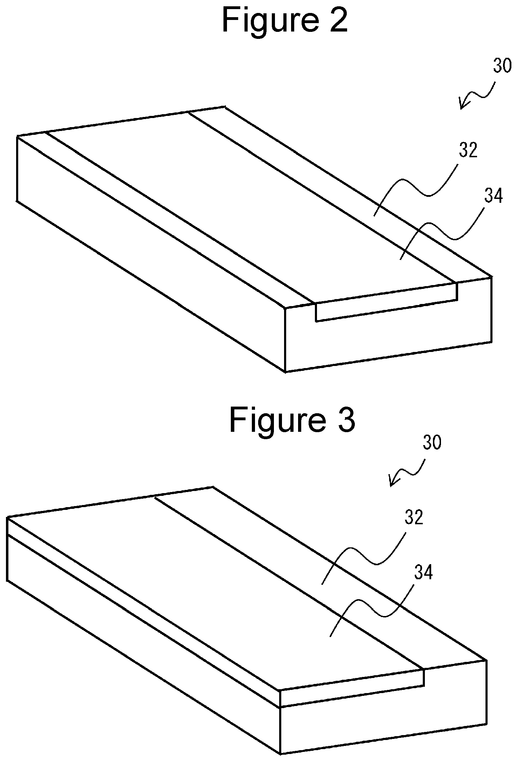

FIGS. 2 to 5 are schematic perspective views showing examples of the electrode lead of the present embodiment. The electrode lead 30 of the present embodiment is an inlay clad member including a first metal member 32 and a second metal member 34 having a higher electrical resistivity (Ω · m) than the first metal member 32, in which the second metal member 34 is fitted into a surface of the first metal member 32 along the longitudinal direction of the electrode lead 30. Therefore, on the surface of the electrode lead 30, the first metal member 32 and the second metal member 34 are alternately arranged along a lateral direction. The second metal member 34 is provided from one end to the other end of the first metal member 32 in the longitudinal direction of the first metal member 32. The second metal member 34 is fitted into a groove formed on the surface of the first metal member 32, and the first metal member 32 and the second metal member 34 are joined.

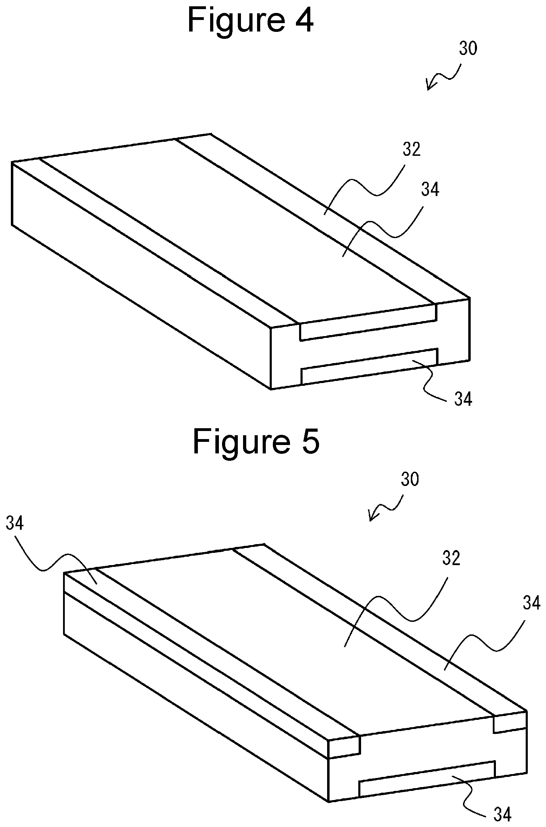

The second metal member 34 fitted into the surface of the first metal member 32 may be provided only on one surface side of the first metal member 32 as shown in FIGS. 2 and 3, or may be provided on one surface side of the first metal member 32 and the other surface side of the first metal member 32 opposite to the one surface side as shown in FIGS. 4 and 5. Then, the second metal member 34 may be provided at a central portion of the first metal member 32 on one surface side of the first metal member 32 as shown in FIG. 2, or may be provided at an end portion of the first metal member 32 on one surface side of the first metal member 32 as shown in FIG. 3. In this case, the central portion and the end portion where the second metal member 34 is provided mean the central portion and the end portion in the lateral direction of the metal lead 30, respectively. In FIG. 3, the second metal member 34 is provided only at one end portion of the electrode lead 30 in the lateral direction of the electrode lead 30 on one surface of the first metal member 32, but may be provided at both end portions of the electrode lead 30 in the lateral direction of the electrode lead 30 on one surface of the first metal member 32. In addition, the second metal member 34 may be provided at a central portion of the first metal member 32 on one surface side of the first metal member 32 and provided at a central portion of the first metal member 32 on the other surface side of the first metal member 32 as shown in FIG. 4, or may be provided at the central portion of the first metal member 32 on one surface side of the first metal member 32 and provided at end portions of the first metal member 32 on the other surface side of the first metal member 32 as shown in FIG. 5. In FIG. 5, the second metal member 34 is provided at both end portions of the first metal member 32 in the lateral direction on the other surface of the first metal member 32, but may be provided only at one end portion of the first metal member 32 in the lateral direction on the other surface of the first metal member 32.

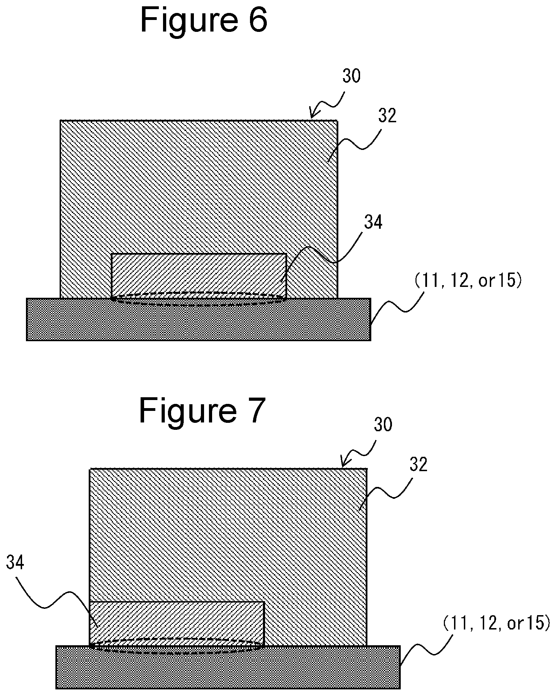

FIG. 6 is a schematic cross-sectional view showing a bonded state between the electrode lead shown in FIG. 2 and the electrode or the battery case. FIG. 7 is a schematic cross-sectional view showing a bonded state between the electrode lead shown in FIG. 3 and the electrode or the battery case. Broken-line frames shown in the drawing indicate bonding portions between the electrode lead and the electrode or the battery case. As shown in FIGS. 6 and 7, in the case of the electrode lead 30 in which the second metal member 34 is provided on the one surface side of the first metal member 32, the second metal member 34 provided on the one surface side of the first metal member 32 and the electrode (the positive electrode 11 or the negative electrode 12) are bonded to each other on one end side in the longitudinal direction, and the second metal member 34 provided on the one surface of the first metal member 32 and the battery case 15 (the case body 16 or the sealing assembly 17) are bonded to each other on the other end side in the longitudinal direction.

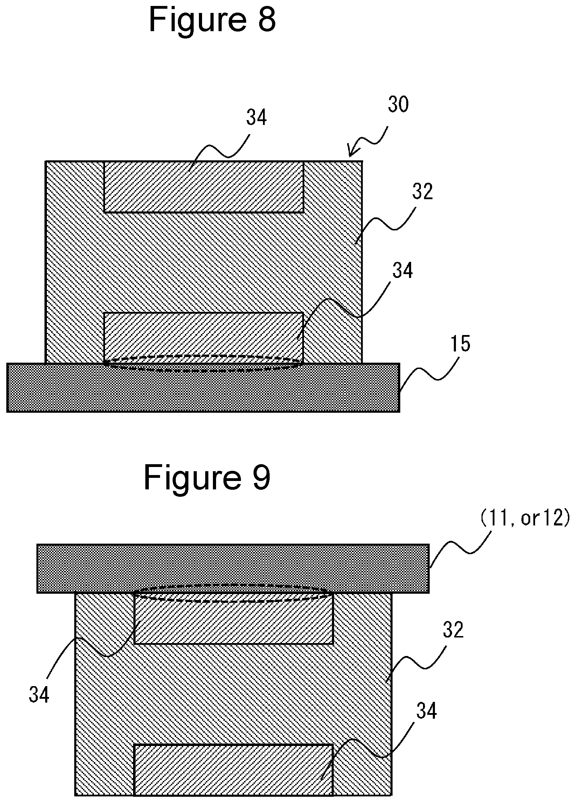

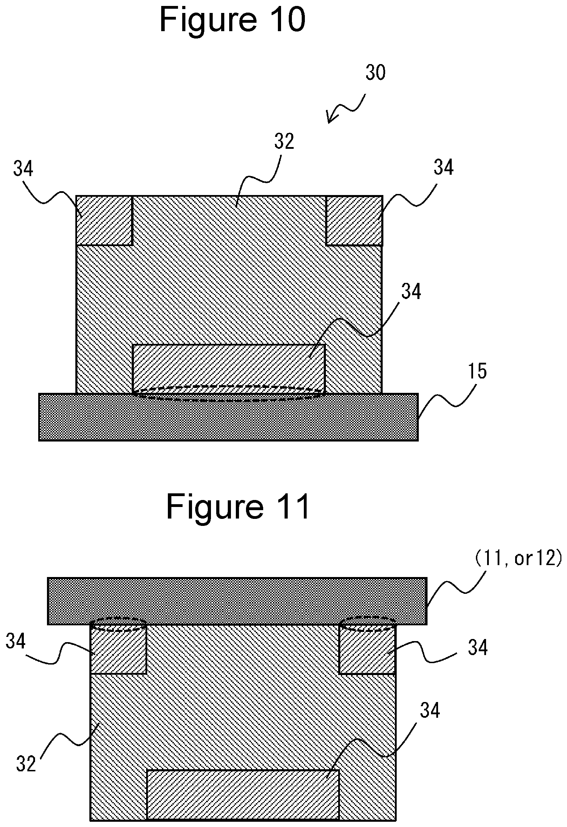

FIG. 8 is a schematic cross-sectional view showing a bonded state between the electrode lead and the battery case shown in FIG. 4, and FIG. 9 is a schematic cross-sectional view showing a bonded state between the electrode lead and the electrode shown in FIG. 4. FIG. 10 is a schematic cross-sectional view showing a bonded state between the electrode lead and the battery case shown in FIG. 5, and FIG. 11 is a schematic cross-sectional view showing a bonded state between the electrode lead and the electrode shown in FIG. 5. Broken-line frames shown in the drawing indicate bonding portions between the electrode lead and the electrode or the battery case. In the case of the electrode lead 30 in which the second metal member 34 is provided on one surface side and the other surface side of the first metal member 32, as shown in FIGS. 8 and 10, the second metal member 34 provided on the one surface side of the first metal member 32 and the battery case 15 (the case body 16 or the sealing assembly 17) are bonded to each other on one end side in the longitudinal direction, and as shown in FIGS. 9 and 11, the second metal member 34 provided on the other surface side of the first metal member 32 and the electrode (the positive electrode 11 or the negative electrode 12) are bonded to each other on the other end side in the longitudinal direction.

As bonding means between the second metal member 34 and the electrode and the battery case, for example, ultrasonic bonding, resistance welding, laser welding, or the like is used. It is desirable that the electrode be bonded on a current collector (a positive electrode current collector or a negative electrode current collector) to be described later.

As in the present embodiment, it is considered that, by using, as the electrode lead 30, an inlay clad member including the first metal member 32 and the second metal member 34 having a higher electrical resistivity than the first metal member 32 and fitted into the surface of the first metal member 32 along the longitudinal direction, the ratio of the first metal member 32 having a lower electrical resistivity can be increased as compared with a conventional electrode lead (so-called overlay clad member) in which a second metal member 34 having a high electrical resistivity is disposed on a surface of a first metal member 32, and thus the resistance of the electrode lead 30 can be reduced. In addition, as in the present embodiment, it is considered that, by bonding the second metal member 34 to the electrode (the positive electrode 11 or the negative electrode 12) or the battery case 15 (the case body 16 or the sealing assembly 17) on one end side and the other end side of the electrode lead 30, oxidation of the surface of the first metal member 32 can be suppressed and thus bondability to the electrode or the battery case 15 can be maintained.

The width (length in the lateral direction) of the second metal member 34 is preferably, for example, in the range of 50 to 70% with respect to the width of the electrode lead 30. The thickness of the second metal member 34 is preferably, for example, in the range of 15 to 35% with respect to the thickness of the electrode lead 30.

The electrode lead 30 of the present embodiment can be used as both the negative electrode lead 21 and the positive electrode lead 20, but is preferably used as at least the negative electrode lead 21. A metal member obtained by plating iron with nickel is generally used for the battery case 15, and a copper foil is generally used for the negative electrode current collector which is a joint portion on the negative electrode 12 side. From the viewpoint of improving the bondability to the battery case 15 and the negative electrode 12, the first metal member 32 constituting the negative electrode lead 21 preferably contains copper as a main component, and the second metal member 34 preferably contains nickel as a main component. In a case where the electrode lead 30 of the present embodiment is used as the positive electrode lead 20, the first metal member 32 preferably contains aluminum as a main component, and the second metal member 34 preferably contains nickel as a main component. Each pf the main components means a component having the highest content among metal components contained.

An example of a method for producing the electrode lead 30 of the present embodiment will be described. A prismatic groove is formed along the longitudinal direction on the surface of the first metal member 32. Then, the second metal member 34 is fitted into the groove and subjected to cold working to obtain an inlay clad member. The inlay clad member is preferably subjected to heat treatment. This can promote diffusion joining of a boundary portion between the first metal member 32 and the second metal member 34. Conditions for the heat treatment may be appropriately set so as to be optimal conditions for the combination of the first metal member 32 and the second metal member 34. In this way, the electrode lead of the present embodiment can be produced.

Hereinafter, the positive electrode 11, the negative electrode 12, and the separator 13 that constitute the electrode assembly 14 will be described in detail.

The positive electrode 11 includes the positive electrode current collector and a positive electrode mixture layer formed on the positive electrode current collector. The positive electrode mixture layer is preferably formed on both surfaces of the positive electrode current collector. As the positive electrode current collector, a foil of a metal that is stable in a potential range of the positive electrode 11, such as aluminum, a film in which the metal is disposed on a surface layer thereof, or the like can be used. The positive electrode mixture layer contains, for example, a positive electrode active material, a binding agent, a conductive agent, and the like. The positive electrode 11 can be produced, for example, by applying a positive electrode mixture slurry containing a positive electrode active material, a binding agent, a conductive agent, and the like onto the positive electrode current collector, drying the applied film, and then rolling the applied film to form a positive electrode mixture layer on the positive electrode current collector.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly or in combination of two or more kinds thereof. From the viewpoint that a high capacity of the secondary battery can be achieved, it is desirable that the positive electrode active material contain a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. These may be used singly or in combination of two or more kinds thereof.

As the binding agent contained in the positive electrode mixture layer, a fluorine-based resin such as polytetrafluoroethylene (PTFE) or polyvinylidene fluoride (PVDF), polyacrylonitrile (PAN), a polyimide-based resin, an acrylic resin, a polyolefin-based resin, carboxymethyl cellulose (CMC) or a salt thereof, polyethylene oxide (PEO), or the like may be used in combination. These may be used singly or in combination of two or more kinds thereof.

The negative electrode 12 includes the negative electrode current collector and a negative electrode mixture layer formed on the negative electrode current collector. The negative electrode mixture layer is preferably formed on both surfaces of the negative electrode current collector. As the negative electrode current collector, a foil of a metal that is stable in a potential range of the negative electrode, such as copper or a copper alloy, a film in which the metal is disposed on a surface layer thereof, or the like can be used. The negative electrode mixture layer contains, for example, a negative electrode active material, a binding agent, and the like. The negative electrode 12 can be produced, for example, by applying a negative electrode mixture slurry containing a negative electrode active material, a binding agent, and the like onto the negative electrode current collector, drying the applied film, and then rolling the applied film to form a negative electrode mixture layer on the negative electrode current collector.

The negative electrode active material contained in the negative electrode mixture layer is not particularly limited as long as it is capable of reversibly absorbing and releasing lithium ions, and a carbon-based active material such as graphite is generally used. The graphite may be any of natural graphite such as scale-like graphite, massive graphite, or earthy graphite, and artificial graphite such as massive artificial graphite or graphitized mesophase carbon microbead. Further, as the negative electrode active material, a metal alloyed with Li, such as Si or Sn, a metal compound containing Si or Sn, a lithium titanium composite oxide, or the like may be used. The negative electrode active material other than the carbon-based active material is preferably a silicon-based active material. Examples of the silicon-based active material include a Si-containing compound represented by SiOₓ (0.5 ≤ x ≤ 1.6), and a Si-containing compound in which Si fine particles are dispersed in a lithium silicate phase represented by Li_{2y}SiO_{(2+y)} (0 < y < 2), or the like. The amount of the silicon-based active material contained in the negative electrode mixture layer is, for example, preferably 1% by mass to 15% by mass, and more preferably 5% by mass to 10% by mass, with respect to the total mass of the negative electrode active material.

Examples of the binding agent contained in the negative electrode mixture layer include agents similar to those for the positive electrode 11. The negative electrode mixture layer may contain a conductive agent. Examples of the conductive agent include agents similar to those for the positive electrode 11.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, or the separator 13 with a material such as an aramid-based resin or ceramic applied onto the surface thereof may be used.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Electrode lead
- 32: First metal member
- 34: Second metal member

## Claims

1. A secondary battery comprising:
an electrode assembly in which a positive electrode and a negative electrode are wound with a separator interposed between the positive electrode and the negative electrode;
a battery case housing the electrode assembly; and
an electrode lead that electrically connects the positive electrode or the negative electrode and the battery case, wherein
the electrode lead is an inlay clad member having a first metal member and a second metal member that has a higher electrical resistivity than the first metal member, the second metal member is fitted into a surface of the first metal member along a longitudinal direction of the electrode lead,
the second metal member and the positive electrode or the negative electrode are bonded on one end side in the longitudinal direction of the electrode lead, and the second metal member and the battery case are bonded on the other end side in the longitudinal direction of the electrode lead.

2. The secondary battery according to claim 1, wherein the second metal member is provided only on one surface side of the first metal member.

3. The secondary battery according to claim 2, wherein the second metal member is provided at a central portion of the first metal member on the one surface side of the first metal member or at an end portion of the first metal member on the one surface side of the first metal member in a lateral direction of the electrode lead.

4. The secondary battery according to claim 1, wherein
the second metal member is provided on one surface side of the first metal member and the other surface side opposite to the one surface, and
the second metal member provided on the one surface side of the first metal member is bonded to the positive electrode or the negative electrode on the one end side of the electrode lead, and the second metal member provided on the other surface side of the first metal member is bonded to the battery case on the other end side of the first electrode lead.

5. The secondary battery according to claim 4, wherein the second metal member is provided at a central portion of the first metal member on the one surface side of the first metal member and at a central portion of the first metal member on the other surface side of the first metal member in a lateral direction of the electrode lead.

6. The secondary battery according to claim 4, wherein the second metal member is provided at an end portion of the first metal member on the one surface side of the first metal member and at a central portion of the first metal member on the other surface side of the first metal member in a lateral direction of the electrode lead.

7. The secondary battery according to any one of claims 1 to 6, wherein the electrode lead is a negative electrode lead.

8. The secondary battery according to claim 7, wherein the first metal member contains copper as a main component, and the second metal member contains nickel as a main component.
